# EUROPÄISCHE PATENTSCHRIFT

(11) **EP 0 914 932 B1**
(45) Veröffentlichungstag und Bekanntmachung des Hinweises auf die Patenterteilung: **14.11.2001**
(21) Anmeldenummer: 98118256.1
(22) Anmeldetag: 25.09.1998
(51) Int. Cl.: B29C 53/08, B29C 57/02, B29C 35/00, B29C 33/50

(54) **Vorrichtung zur formgebenden Vulkanisation eines Schlauches**
Device for the shaping vulcanization of a tube
Installation pour la vulcanisation de mise en forme d'un tube

(30) Priorität: 07.11.1997 DE 29719817 U
(43) Veröffentlichungstag der Anmeldung: 12.05.1999
(73) Patentinhaber: Mündener Gummiwerk GmbH, 34346 Hann. Münden (DE)
(72) Erfinder: Suckau, Wolfgang, Dipl.-Ing., 34346 Hann. Münden (DE); Stracke, Karl-Heinz, 34346 Hann. Münden (DE); Baumann, Ralph, Dipl.-Ing., 34128 Kassel (DE)
(74) Vertreter: WALTHER, WALTHER & HINZ Patentanwälte

(56) Entgegenhaltungen:
- DE-A- 2 737 278
- FR-A- 2 520 664
- FR-A- 2 548 086
- FR-A- 2 734 508

## Beschreibung

Die Erfindung betrifft eine Vorrichtung zur formgebenden Vulkanisation eines Schlauches aus einem Elastomer, z. B. Kautschuk, umfassend einen Dorn zum Aufziehen des Schlauches, wobei auf den Schlauch zur Erzeugung einer Einprägung ein elastischer Spannring aufbringbar ist, wobei auf den Dorn endseitig ein Begrenzungsring aufsetzbar ist.

Schläuche der eingangs genannten Art werden bevorzugt im Automobilbau zum Beispiel als Ladeluftschläuche, Kühlwasserschläuche und ähnliches eingesetzt. Ein solcher Schlauch besteht als Rohling aus einer Elastomerinnenschicht, einem Druckträger aus einem Textilgestrick und einer Elastomerdeckschicht. Ein derartiger Rohling wird auf einen Dorn aufgezogen, wobei der Dorn eine vorgegebene Form hat, die der entspricht, die der Rohling nachher als fertiger Schlauch einnehmen soll. Der auf den Dorn aufgezogene Rohling wird alsdann in einem Autoklaven bei zirka 160° bis 180° (je nach Werkstoff) vulkanisiert. Nachdem der fertige Schlauch vom Dorn abgezogen wurde, wird der Schlauch auf Länge geschnitten. Desweiteren wird auf dem Umfang des Schlauches im Bereich des Endes des Schlauches eine umlaufende Einprägung, insbesondere in Form einer umlaufenden Nut, eingefräst, die der Aufnahme einer Schlauchschelle dient. Um die Montage zu erleichtern, ist auch bekannt, lediglich die Stelle, an der die Schlauchschelle zu positionieren ist, farblich zu markieren. Darüber hinaus wird häufig auch an der Innenwandung des Schlauches eine Fase eingeschnitten, um das Aufschieben eines solchen Schlauches auf ein Rohr zu erleichtern.

Aus der DE-A 195 42 115 ist bekannt, eine umlaufende Nut für die Schlauchschelle dadurch herzustellen, dass zwei Halbschalen aus Metall den Schlauchrohling an dieser Stelle quasi zusammenquetschen. In Abhängigkeit von dem Außendurch-messer des Schlauches wird nun durch die Halbschalen aus Metall bei einem zu dicken Schlauchrohling zu viel Material verdrängt, mit der Folge, dass in der Trennebene, das heißt zwischen den Enden der beiden Halbschalen Materialstege entstehen. Das bedeutet, dass keine vollständig durchgehende Nut gebildet wird, Diese Stege müssen demzufolge wieder entfernt werden, da anderenfalls eine Schlauchschelle nicht vollflächig in der für sie vorgesehenen Nut anliegen würde. Ist hingegen der Schlauchrohling zu dünn, dann entsteht keine den Umfang vollständig erfassende Nut. Dies ist insofern ebenfalls unerwünscht, weil auch in einem solchen Fall die Schlauchschelle nicht vollflächig in der für sie vorgesehene Nut aufliegen wird. In jedem Fall können daher Dichtigkeitsprobleme auftauchen.

Aus der DE-A1 195 42 115, der DE-PS 27 37 277 und der DE-PS 27 37 278 ist bekannt, auf den Dorn zu beiden Enden jeweils einen Begrenzungsring derart aufzusetzen, dass durch diese Begrenzungsringe die maximale Länge des Schlauches zuzüglich eines Schrumpfanteiles vorgegeben ist. Das Maß der Schrumpfung richtet sich nach der jeweiligen zu verarbeitenden Elastomercharge und ist demzufolge materialabhängig. Mit Hilfe derartiger Begrenzungsringe besteht nunmehr die Möglichkeit einen Schlauch bereitzustellen, der nach der Vulkanisation nicht mehr nachbearbeitet werden muß, und hier insbesondere nicht mehr auf Länge geschnitten werden muß. Darüber hinaus wird erreicht, dass, dadurch dass der Schlauch endseitig nicht mehr geschnitten wird, keine Fäden der Gewebeeinlage herausstehen, die Motorflüssigkeiten einsaugen können, und somit von innen zu einer Zerstörung des Schlauches führen können.

Aus der FR 2520664 ist bekannt, auf einem auf dem Dorn aufliegenden Schlauch zwei wellenförmige Erhöhungen einzuprägen, wobei zur Einprägung der Erhöhungen ein nach Art einer Klammer ausgebildeter Ring vorgesehen ist, der auf den Schlauch aufgesetzt wird.

Nachteilig hierbei ist, dass der elastische nach Art einer Klammer ausgebildete Ring während der Vulkanisation, und insbesondere bei unachtsamer Handhabung, von dem Schlauch abgezogen werden kann. Die Gefahr besteht immer dann, wenn derartige Dorne mit aufgesetzten Schläuchen zu Hauf in die Kammer gelegt werden, um dort vulkanisiert zu werden.

Der Erfindung liegt daher die Aufgabe zu Grunde, eine Vorrichtung der eingangs genannten Art derart weiterzubilden, dass der elastische Spannring während der Vulkanisation eine definierte feste Lage auf dem Schlauch einnimmt, wobei eine Verschiebung nicht mehr möglich ist.

Die Aufgabe wird erfindungsgemäß dadurch gelöst, dass der Begrenzungsring auf seinem dem Schlauch zugewandten Ende einen stufenförmigen Absatz aufweist. Der stufenförmige Absatz dient einerseits während der Vulkanisation als Anlagekante bzw. als Anschlag für den elastischen Spannring. Nach Fertigstellung des Schlauches dient dieser durch den Absatz des Begrenzungsringes hergestellte Wulst auch als Anlagekante für die Schlauchschelle. Durch die Erfindung werden somit zwei Vorteile realisiert; zum Einen ist der Spannring während der Vulkanisation fixiert und zum Anderen wird auf dem fertigen Schlauch die Schlauchschelle in ihrer vorbestimmten Lage fixiert. Denn auch hier gilt, dass fertige Schläuche samt Schlauchschelle in Gitterboxen lagern, und immer die Gefahr besteht, dass sich einzelne Schlauchschellen von dem Schlauch lösen, wenn keine besonderen Vorkehrungen getroffen sind. Bei dem erfindungsgemäßen Schlauch ist ein Lösen der Schlauchschelle von dem Schlauch auf Grund des durch den Begrenzungsring erzeugten einseitigen Wulstes nicht mehr möglich.

Im Einzelnen ist vorgesehen, dass der Begrenzungsring nach Art eines Bajonettverschlusses mit dem Dorn verbind bar ist. Hierzu besitzt der Begrenzungsring Führungsmittel, die durch entsprechende auf dem Umfang des Dornes angeordnete Nuten aufnehmbar sind.

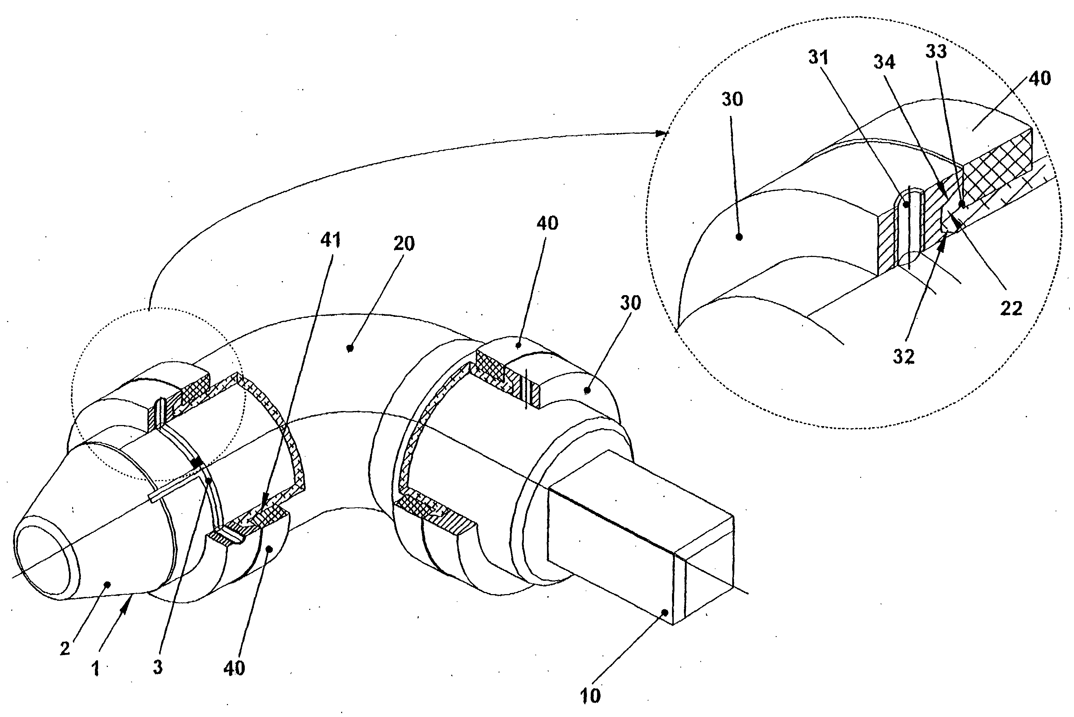

Anhand der perspektivischen Darstellung in der Zeichnung wird die Erfindung nachstehend beispielhaft näher erläutert.

Der insgesamt mit 1 bezeichnete Dorn weist an seinem hinteren Ende eine Aufnahme 10 zum Einhängen des Dornes in eine Vorrichtung auf. Der Dorn selbst ist im vorderen Bereich 2 konisch ausgebildet, um das Darüberstreifen des Schlauches 20 zu erleichtern. Jeweils im Endbereich des Dornes, stirnseitig am Schlauch 20 anliegend, ist ein Begrenzungsring 30 vorgesehen. Dieser Begrenzungsring 30 ist nach Art eines Bajonettverschlusses mit dem Dorn verbindbar; hierzu besitzt der Dorn entsprechende Nuten 3, in die am Begrenzungsring 30 angeordnete Führungsmittel in Form von Stiften 31 eingreifen.

Der Begrenzungsring 30 zeigt darüber hinaus, auf seiner dem Dorn zugewandten Seite einen dreieckförmigen Bund 32, der dafür sorgt, dass in diesem Bereich der Schlauch 20 eine entsprechende Fase nach der Aufvulkanisation aufweist. Des weiteren zeigt der Begrenzungsring 30 einen Absatz 33 mit einer Fase 34, die der Ausbildung eines Wulstes 22 im Schlauchabschluß dient.

An dem Begrenzungsring 30 anliegend befindet sich ein Spannring 40, wobei der Spannring 40 einen Innendurchmesser derart aufweist, dass auf dem Schlauch beim Vulkanisieren eine Nut 41 entsteht. Diese Nut 41 dient der Aufnahme einer Schlauchschelle. Für die Aufbringung des Spannringes 40 auf den Schlauch kann der Spannring aus einem elastischen Material ausgebildet sein, so dass der Spannring den Schlauch an dieser Stelle einschnürend erfaßt.

## Patentansprüche

1. Vorrichtung zur formgebenden Vulkanisation eines Schlauches aus einem Elastomer, z. B. Kautschuck, umfassend einen Dorn (2) zum Aufziehen des Schlauches (20), wobei auf den Schlauch (20) zur Erzeugung einer Einprägung ein elastischer Spannring (40) aufbringbar ist, wobei auf den Dorn (2) endseitig ein Begrenzungsring aufsetzbar ist,
**dadurch gekennzeichnet,**
**dass** der Begrenzungsring (30) auf seinem dem Schlauch (20) zugewandten Ende einen stufenförmigen Absatz (33) aufweist.

2. Vorrichtung nach Anspruch 1,
**dadurch gekennzeichnet,**
**dass** der Spannring (40) endseitig an dem Begrenzungsring (30) anliegt.

3. Vorrichtung nach Anspruch 1,
**dadurch gekennzeichnet,**
**dass** der Begrenzungsring (30) nach Art eines Bajonettverschlusses mit dem Dorn (2) verbindbar ist.

4. Vorrichtung nach Anspruch 1,
**dadurch gekennzeichnet,**
**dass** der stufenförmige Absatz (33) eine Fase (34) aufweist.

5. Vorrichtung nach Anspruch 1,
**dadurch gekennzeichnet,**
**dass** die Einprägung als Nut ausgebildet ist.

6. Vorrichtung nach Anspruch 5,
**dadurch gekennzeichnet,**
**dass** die Einprägung zur Aufnahme einer Schlauchschelle vorgesehen ist.

## Claims

1. Device for the shape-giving vulcanization of a hose made of an elastomer, e.g. of rubber, comprising a mandrel (2) onto which the hose (20) is layered, wherein an elastic tension ring (40) may be placed on the hose (20) for producing an impression, a limitation ring being positionable on the mandrel (2) at the end thereof,
**characterized in that**
the limitation ring (30) is provided with a step (33) on its side facing the hose (20).

2. Device according to claim 1,
**characterized in that** the tension ring (40) abuts with its end on the limitation ring (30).

3. Device according to claim 1,
**characterized in that** the limitation ring (30) is connectable with the mandrel (2) in the fashion of a bayonet socket.

4. Device according to claim 1,
**characterized in that** the step (33) is provided with a chamfer (34).

5. Device according to claim 1,
**characterized in that** the impression is designed as a groove.

6. Device according to claim 5,
**characterized in that** the impression is intended to receive a hose fitting.

## Revendications

1. Dispositif pour la vulcanisation de mise en forme d'un tuyau en un élastomère, par exemple en caoutchouc, qui comprend un mandrin (2) pour y enfiler le tuyau (20), un anneau tendeur élastique (40) pouvant être disposé sur le tuyau (20) pour y marquer une empreinte et un anneau de délimitation pouvant être placé à l'extrémité du mandrin (2),
**caractérisé en ce que** l'anneau de délimitation (30) est pourvu à son extrémité faisant face au tuyau (20) d'un épaulement (33) en forme de gradin.

2. Dispositif selon la revendication 1,
**caractérisé en ce que**
l'anneau tendeur (40) prend appui sur l'extrémité de l'anneau de délimitation (30).

3. Dispositif selon la revendication 1,
**caractérisé en ce que** l'anneau de délimitation (30) peut être relié au mandrin (2) à la manière d'une fermeture à baïonnette.

4. Dispositif selon la revendication 1,
**caractérisé en ce que** l'épaulement (33) en forme de gradin est pourvu d'un chanfrein (34).

5. Dispositif selon la revendication 1,
**caractérisé en ce que** l'empreinte a la forme d'une rainure.

6. Dispositif selon la revendication 1,
**caractérisé en ce que** l'empreinte est prévue pour recevoir un collier de serrage.
